# EUROPEAN PATENT SPECIFICATION

(11) **EP 1 514 726 B1**
(45) Date of publication and mention of the grant of the patent: **13.02.2008**
(21) Application number: 04021920.6
(22) Date of filing: 15.09.2004
(51) Int. Cl.: B60N 2/22

(54) **Adjusting mechanism for bowden cables**
Einstellvorrichtung für Bowdenzüge
Dispositif d'ajustement pour câbles Bowden

(30) Priority: 15.09.2003 DE 10342563
(43) Date of publication of application: 16.03.2005
(73) Proprietor: FICO CABLES LDA, 4471 Maia (PT)
(72) Inventor: Cunha, Pedro, Vermoim, 4471 Maia (PT)
(74) Representative: Hess, Peter K. G.

(56) References cited:
- US-A- 2 395 576
- US-A- 3 377 874
- US-A- 4 143 905
- US-A- 4 805 481

## Description

### 1. Field of the invention

The present invention relates to an adjusting mechanism for a Bowden cable, for example for adjusting of a support structure in the backrest of a vehicle seat.

### 2. Background of the invention

In order to enhance the comfort of a vehicle seat, in particular of the backrest of a vehicle seat, different support structures are installed in these backrests. These support structures are mostly adapted to the back shape of the seated person in order to provide this person on the one hand a rest and on the other hand a sufficient support for the natural back shape. Such support structures are mostly predetermined in their shape and they only slightly give way based on their resilient properties. Other support structures are adaptable by means of adjusting mechanisms to different needs of the seated person.

By means of known adjusting mechanisms, on the one hand the arcing of the support structure, particularly in the area of the lumbar spine, can be adapted. A further function of these adjusting mechanisms consists in the shifting of the support structure in height parallel to the running direction of the backbone. In this manner, it is possible to optimally adapt the support structure of the backrest to seated persons having different size.

Different adjusting mechanisms for the backrest of a vehicle seat are disclosed in the US-A-4 805 481 which is considered to be the best prior art, the US-A-2 395 576 and in the US-A-4 143 905. The US-A-4 805 481 discloses a space consuming adjusting mechanism since the driving motion and the adjusting motion are transmitted via remotely of each other arranged pivot axis. A more compact arrangement is described in the two other US patents. In these arrangements, the adjusting mechanism is adjusted from an initial position in which no adjusting is possible, to an engaging position, in which an adjusting is possible, via a main pivot axis. Subsequently, an adjusting of the back of the seat is realized by means of the continuing rotation around the main pivot axis while the adjusting mechanism is still in the engaging position. As soon as the adjusting process is finished, i.e. the rotation around the main pivot axis ends, the adjusting mechanism is returned to the initial position by a slight opposite rotating around the main pivot axis compared to the previous rotation.

The transition from the initial position to the engaging position of the adjusting mechanism is realized by the coupling of a rotation around the main pivot axis to a rotation around different additional axis which have the same orientation. The rotation around the additional axis engages the engaging means of different construction with an outer adjusting element. The provision of different additional axis is related to high constructive efforts and thus also to high manufacturing efforts. Besides this manufacturing effort, the main axis and the additional axis have to be expensively serviced in order to guarantee a long lasting functioning of the adjusting mechanism. Additionally, the adjusting mechanisms disclosed in the above mentioned US patents consist of a plurality of components, thus the assembly of which is also very time-consuming. Additionally the assembly of such adjusting mechanism requires special tools and devices which also increases assembly time and costs. Further, the plurality of components leads to a high weight of the adjusting mechanisms which especially in vehicles negatively affects the fuel consumption.

It is therefore the technical problem of the present invention to provide an adjusting mechanism for a Bowden cable, particularly for a support structure in the backrest of a vehicle seat, which is constructively simply configured, which can be manufactured with limited effort and which requires less maintenance. Further, an adjusting mechanism should be provided, which requires less space and can be realized of lightweight materials. Further, the adjusting mechanism should be usable and adaptable for different use cases.

### 3. Summary of the invention

The above mentioned problem is solved by an adjusting mechanism according to the invention for adjusting of at least one bowden cable, comprising a rotatably supported driving body, a rotatably supported driving shaft, wherein the driving body and the driving shaft have the same rotational axis, a first gearwheel-like latching means at the driving shaft, which is engageable in a first rotational direction with the driving body, to transmit a rotational motion of the driving body to the driving shaft in the first rotational direction and a second gearwheel-like latching means at the driving shaft, which is engageable in a second rotational direction with the driving body, to transmit a rotational motion of the driving body to the driving shaft in the second rotational direction.

Due to the provision of independent gearwheel-like latching means for the first and the second rotational direction of the adjusting mechanism, they can specifically be adapted to the corresponding rotational direction, so that a secure actuation of the adjusting mechanism is equally provided. Further this adjusting mechanism is characterized by a particularly simplicity and it is maintenance free. The engagement of the driving body with independent latching means can be differently controlled, dependent on the rotational direction, so that the adjusting mechanism is usable for different use cases. Thus, it can for example be determined, that the adjusting mechanism locks during non-actuation, i.e. that the driving shaft can not undesirably rotate. Further, certain actuation angles can be defined for each rotational direction, wherein only after exceeding the same an actuation of the Bowden cable is to be performed.

In a first preferred embodiment the first and the second gearwheel-like latching means are axially arranged at the driving shaft one after the other. This arrangement of the latching means allows a constructively simple and space saving construction of the adjusting mechanism.

Preferably the first and the second gearwheel-like latching means respectively comprise a cylindrical shape and teeth, which are arranged onto the cylinder surface and which radially extend to the outside. Due to the cylindrical shape of the latching means initially an unlimited adjusting range is provided, so that adjusting force and required rotations of the driving shaft for a complete adjustment can be determined by an appropriate selection of the further components.

In a preferred embodiment, the first gearwheel-like latching means and the second gearwheel-like latching means comprise the same diameter. With latching means of the same diameter the transmittable torques are equal for both rotational directions. With latching mans of different diameters the transmittable torques are different. If for example the latching means for the tightening of the Bowden cables comprises a comparably large diameter, the transmittable torques are comparably higher, since comparably lower actuation forces appear at the latching means.

Preferably the teeth of the first gearwheel-like latching means are sloped in a first tangential direction with respect to the rotational axis and the teeth of the second gearwheel-like latching means are sloped in a second tangential direction with respect to the rotational axis. The slope of the teeth allows a good latching and a preferably tangential force introduction onto a large contact face of the latching means. Due to the slope, the teeth comprise a sawtooth-like profile, which is particularly suitable for a latching in a preferred direction.

In a further preferred embodiment, the driving body comprises at least one first latch, which is engageable with the first latching means and at least one second latch which is engageable with the second latching means.

In a further preferred embodiment, the driving body comprises two first latches, which are arranged opposing each other and symmetrically to the rotational axis of the driving body and the driving body comprises two second latches, which are arranged opposing each other and symmetrically to the rotational axis of the driving body. Due to the symmetrical force introduction to the latching means a deflection of the driving shaft is prevented an thereby the reliability of the adjusting mechanism is improved.

Preferably one of the first latches and one of the second latches respectively are biased in direction of the first and second latching means by means of a single spring.

In a further preferred embodiment the adjusting mechanism further comprises a housing, having at least one pin which extends in axial direction to the inside, wherein the pin disengages the at least one of the second latches from the second latching means during a rotation of the driving body in the first rotational direction and wherein the pin disengages at least one of the first latches from the first latching means during a rotation of the driving body in the second rotational direction. The arrangement and the shape of the pin determines if and at which rotational angle a latch engages with the corresponding latching means.

In a further preferred embodiment the driving shaft extends through the complete adjusting mechanism to assemble the same together. Preferably the shaft comprises recesses at both ends, which are latchable with resilient holding elements of housing and with resilient holding elements of the driving body. In this case, the adjusting mechanism can be plugged together in a simple fashion.

In a further preferred embodiment, at least one extension spring is suspended between the driving body and the housing in radial direction, to automatically return the driving body to its initial position after an actuation of the driving body in the first or the second rotational direction. The extension springs can be cost efficient standard elements, which lower the manufacturing costs of the adjusting mechanism and which provide a sufficiently high return force.

### 4. Short description of the drawings

In the following preferred embodiments of the invention are described with reference to the accompanying drawings, in which:
- Fig. 1: is a three-dimensional view of an embodiment of the adjusting mechanism according to the invention in assembled condition;
- Fig. 2: is a partially sectional view of the adjusting mechanism of Fig. 1, wherein the housing and the driving body are shown sectional;
- Fig. 3: is a three-dimensional exploded view of the adjusting mechanism of Fig. 1;
- Fig. 4: is a three-dimensional view of the adjusting mechanism of Fig. 1, wherein for clarification the housing is not shown;
- Fig. 5: is a partially sectional front view of the adjusting mechanism of Fig. 1, in which particularly the latching mechanics of the adjusting mechanism is shown;
- Fig. 6: is a partially sectional side view of the adjusting mechanism of Fig. 1.

### 5. Description of the preferred embodiments

In the following preferred embodiments of the invention are discussed with reference to the figures.

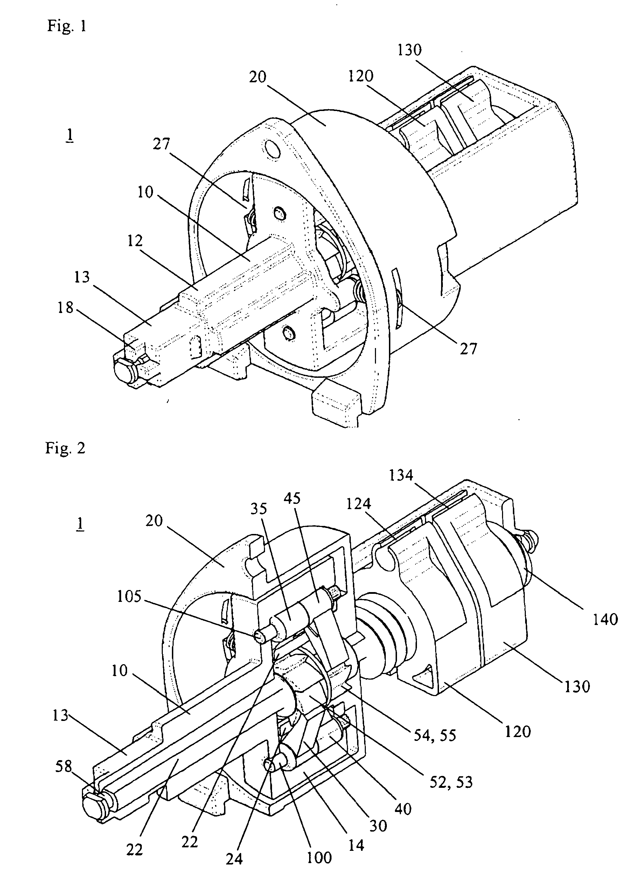

In figures 1 and 2 a first preferred embodiment of the adjusting mechanism 1 according to the invention is shown in assembled condition. To show the inner components of the adjusting mechanism 1 the housing 20 and the driving body 10 are sectionally shown in figure 2.

The adjusting mechanism 1 is used to tighten or to release bowden cables. Basically the adjusting mechanism 1 can be used for the actuation of one or more bowden cables. In the shown embodiment the adjusting mechanism 1 is designed for the actuation of only one Bowden cable (not shown). For the actuation of a bowden cable the inner cable of the bowden cable is displaced with respect to the outer sheath. For this purpose the cable end of the inner cable of the bowden cable is inserted into a first receptacle 124 of a first nut 120. The outer sheath of the bowden cable is inserted into a receptacle 134 of a second nut 130. The first nut 120 be can axially displaced with respect to the second nut 130. The displacement of the nuts 120, 130 is done by a rotation of a spindle 140, which comprises two oppositely threaded portions 142, 144 at its outer side. For example the threaded portion 142 can be right handed threads and the threaded portion 144 can be left handed threads. The nuts 120, 130 which are screwed onto the spindle 140 accordingly comprise corresponding inner threads. During a rotation of spindle 140, the nuts 120, 130 are moved to each other or away from each other, whereby the Bowden cable connected thereto is tightened or released.

The spindle 140 is rotatably driven by a driving shaft 50. To this end, the driving shaft 50 axially extends through the spindle 140 an forms a positive connection therewith, to transmit a torque. The driving shaft 50 is rotatably driven by means of a ratchet mechanics 30, 35, 40, 45, 52, 54 which is mounted at the driving body 10. The ratchet mechanics is explained in detail below. The driving body 10 is for example rotated by the user by means of a hand lever or a rotating knob (not shown).

The adjusting mechanism 1 is for example mounted within the backrest of a vehicle seat, wherein its housing 20 preferably is mounted on a sheet metal frame of the backrest. A part of the adjusting mechanism 1 namely a shaft portion 12 of the driving body 10 laterally projects out of the backrest, so that the hand lever or the rotating knob can be mounted thereon. For transmitting of a torque to the driving body 10 the shaft portion 12 is provided with a shaft connection 13, which is positively connected to the hand lever or the rotating knob. As already disclosed, the adjusting mechanism 1 serves for tightening or releasing of at least one bowden cable. This is done by a rotation of the spindle 140. For a complete adjustment of the bowden cable a certain number of rotations of the spindle 140 is required. For example it could be necessary to rotate the spindle 140 by one rotation, that means by 360°. Other maximum required rotation angles as for example two rotations (720°) or three rotations (1080°) or any other rotation angle is preferred. It depends on of the slope of the threaded portions 142 and 144.

The adjusting mechanism 1 is provided with a ratchet mechanics so that a user must not perform these rotations continuously. The user can repeatedly perform short motions with the rotating knob or the hand lever which then further rotate the spindle 140 around a certain amount. After the short rotational motions to the one or the other direction the hand lever or the rotating knob is automatically returned to its initial position. The adjustment of the bowden cables is therefore simple and convenient.

To fulfil this function, the driving body 10 must suitably engage the driving shaft 50. To this end, the driving shaft 50 is provided with a first gearwheel-like latching means 52 for the first rotational direction and a second gearwheel-like latching means 54 for the second rotational direction. The gearwheel-like latching means 52 and 54 respectively comprise an essentially cylindrical shape, having teeth 53 which project to the outside and which are arranged onto the cylinder surface. The teeth 53 of the first latching means 52 are sloped in a first tangential direction with respect to the rotational axis to safely and reliably transmit a rotational motion in one rotational direction. For transmitting of a rotational motion in the other rotational direction the teeth 55 of the second latching means 54 are sloped in a second tangential direction with respect to the rotational axis.

For the actuation of the first latching means 52, the driving body 10 is provided with first latches 30 and 35, which are pivotably supported at the driving body 10. During a rotation of the driving body 10 in the first rotational direction, the tips of the latches 30 and 35 engage within the teeth 53 of the first latching means 52 and the driving shaft 50 is rotated in the first rotational direction. If, however, the driving body 10 is rotated in the other rotational direction, i.e. in the second rotational direction, the first latches 30, 35 glide over the teeth 53 of the first latching means 52 and do not transmit a rotational motion in the second rotational direction. This means, that the first latches 30, 35 can only transmit a rotational motion to the driving shaft 50 in the first rotational direction.

For a transmission of a rotational motion in the second rotational direction the driving body 10 is provided with second latches 40 and 45, which can engage within the teeth 55 of the second latching means 54. During a rotation of the driving body 10 in the second rotational direction, the second latches 40 and 45 transmit a rotational motion in the second rotational direction to the driving shaft 50. During a rotation of the driving body 10 in the first rotational direction the latches 40 and 45 glide over the teeth 55 of the second latching means 54, so that they do not transmit a rotational motion in the first rotational direction to the driving shaft 50. This means, that the second latches 40, 45 can only transmit a rotational motion in the second rotational direction to the driving shaft 50.

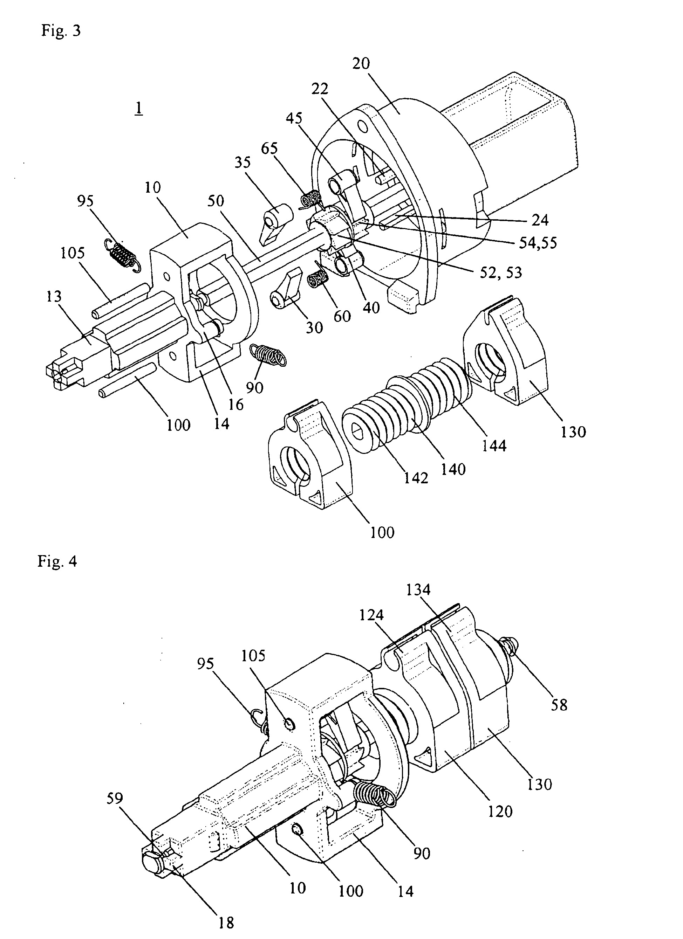

The adjusting mechanism 1, as it is for example shown in Figure 3, is provided with two adjusting mechanisms 52, 54 which are independent from each other and it is provided with corresponding latches 30, 35, 40, 45 at the driving body 10. For each rotational direction one independent ratchet mechanics is provided, which is particularly adapted to this rotational direction. Therefore, a particularly reliable actuation is made possible. The first 52 and the second latching means 54 are axially arranged at the driving shaft 50 one after the other, so that both ratchet mechanics do not interfere with each other.

As shown in Figures 2 and 3 the driving body 10 comprises two first latches 30, 35 which are arranged opposing each other symmetrically to the rotational axis of the driving body 10, whereby a symmetrically introduction of the force to the latching means 2 is carried out. Thereby, a deflection of the driving shaft 50 is prevented.

For the same purpose the driving body 10 is also provided with two second latches 40, 45 which also are arranged opposing each other symmetrically to the rotational axis of the driving body 10.

The latches 30, 35, 40, 45 are biased in direction of the latching means 52, 54 by means of springs 60, 65 so that the latches 30, 35, 40, 45 can engage with the teeth 53, 55 in the one rotational direction and can glide over the corresponding teeth 53, 55 in the other rotational direction respectively. The spring 65 simultaneously biases the latch 35 and the latch 45 in direction of the driving shaft 50 and the spring 60 simultaneously biases the latch 30 and the latch 40 in direction of the driving shaft 50. Thereby, two latches are respectively biased by only one spring in direction of the first and second latching means 52, 54. The latches 30, 35, 40, 45 are configured in its support area, so that they can almost completely receive the springs 60, 65.

For supporting of the latches 30, 35, 40, 45 the driving body 10 is provided with a frame shaped portion 14. Through this frame shaped portion 14 two opposing supporting pins 100 and 105 are pushed through which pivotably support the latches 30, 35, 40, 45. The supporting pin 100 thereby supports latch 30, latch 40 and spring 60 which is enclosed there between and the support pin 105 supports latch 35, latch 45 and spring 65, which is enclosed there between.

The frame shaped portion 14 further comprises two receptacles 16 and 17 for extension springs 90 and 95, which are suspended between the driving body 10 and housing 20 in radial direction. They act for returning the driving body 10 automatically to its initial position which is for example shown in Figure 1 after an actuation. The springs 90, 95 are connected at corresponding receptacles 27 at the housing 20. The use of extension springs 90 and 95 has the advantage that simple standard springs can be used and a reliable return of the driving body 10 is guaranteed.

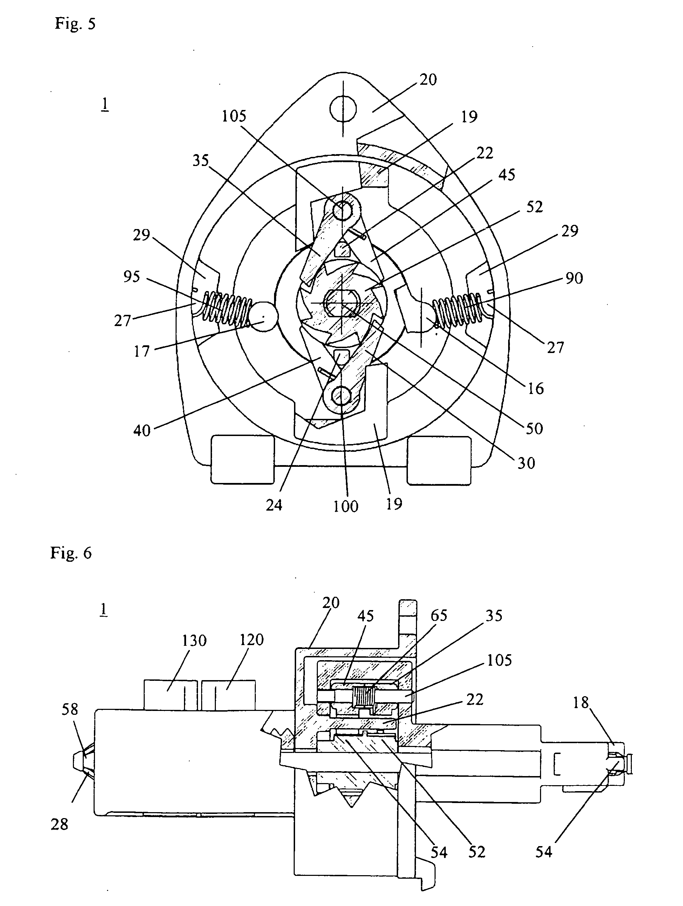

In Figure 5 the ratchet mechanics of the adjusting mechanism 1 is shown in more detail. It particularly shows the sloped shape of teeth 53 of the first latching means 52 and the shape of the first latches 30, 35 which engage therein. In particular, Figure 5 shows two pins 22 and 24 which project to the inside in axial direction, which are connected to the housing 20. The pins 22 and 24 have the purpose of disengaging the second latches 40 and 45 from the second latching element 55 during a rotation of the driving body 10 in the first rotational direction, so that the driving shaft 50 can be actuated in counter clockwise direction, without blocking by the latches 40 and 45. In this case, the pin 22 pushes the latch 45 and the pin 24 pushes the latch 40 radial outwardly. During a rotation of the driving body 10 to the second rotational direction, i.e. clockwise, the latch 35 is pushed outwardly by the pin 22 and the latch 30 is pushed by the pin 24. The driving shaft 50 can be rotated in clockwise direction by the latches 45 and 40 which are in engagement, wherein the latches 30 and 35 do not block.

In the embodiment of figure 5 the latches 30, 35, 40, 45 block, if the adjusting mechanism is not actuated. Thereby, an undesired rotation of the driving shaft 50 is prevented and the Bowden cables are not undesirably adjusted.

By the described arrangement a very easy and cost efficiently to be manufactured ratchet arrangement is provided for both rotational directions. In Figure 5 a first and a second stop 19 at the driving body 10 can be seen, which limits the rotation of the driving body 10 to an angle below approximately 90°. Corresponding stops 29 are provided at the housing 20.

Figure 5 further shows the arrangement of the extension springs 90 and 95, which return the driving body 10 to its initial position.

In Figure 6 a partially sectional side view of the adjusting mechanism 1 is shown. It shows once more the arrangement of the elements of both ratchet mechanics.

As it can be furthermore seen in Figure 6, the driving shaft 50 extends through the complete adjusting mechanism 1, to hold the same together, respectively to assemble the same together. The shaft 50 is therefore provided at its both ends with recesses 58 and 59, which are latchable with resilient holding elements 18 of driving body 10 and resilient holding elements 28 of housing 20. For the assembly, the adjusting mechanism 1 is simply plugged together and is held together in axial direction by the driving shaft 50. For the assembly no tools or devices are necessary, therefore it can be easily and cost efficiently performed.

Preferably all elements of the adjusting mechanism 1 are made of a plastic material. Particularly preferred a glass fiber reinforced plastic material is used. The used springs 60, 65 and the extension springs 90 and 95 as well as the support pins 100 and 105 are preferably made of metal. The adjusting mechanism 1 is therefore particularly lightweight and maintenance free and therefore particularly suitable for the use in motor vehicles.

### List of reference signs

- 1: Adjusting mechanism
- 10: Driving body
- 12: Shaft portion
- 13: Shaft connection
- 14: Frame shaped portion
- 16, 17: Receptacles for extension springs
- 18: Resilient holding element of driving body
- 19: Stops
- 20: Housing
- 22: Pin
- 24: Pin
- 27: Receptacles
- 28: Resilient holding elements of housing
- 29: Stops
- 30: First latch
- 35: First latch
- 40: Second latch
- 45: Second latch
- 50: Driving shaft
- 52: First gearwheel-like latching element
- 53: Teeth of the first latching element
- 54: Second gearwheel-like latching element
- 55: Teeth of the second latching element
- 58: First recess
- 59: Second recess
- 60: First spring
- 65: Second spring
- 90: First extension spring
- 95: Second extension spring
- 100: First support pin
- 105: Second support pin
- 120: First nut
- 124: Receptacle for cable end
- 130: Second nut
- 134: Receptacle for outer sheath of bowden cable
- 140: Spindle
- 142: First threaded area
- 144: Second threaded area

## Claims

1. Adjusting mechanism (1) for adjusting of at least one bowden cable, comprising:
a. a rotatably supported driving body (10);
b. a rotatably supported driving shaft (50), wherein the driving body (10) and the driving shaft (50) have the same rotational axis;
c. a first gearwheel-like latching means (52) at the driving shaft. (50), which is engageable in a first rotational direction with the driving body (10), to transmit a rotational motion of the driving body (10) to the driving shaft (50) in the first rotational direction; and
d. a second gearwheel-like latching means (54) at the driving shaft (50), which is engageable in a second rotational direction with the driving body (10), to transmit a rotational motion of the driving body (10) to the driving shaft (50) in the second rotational direction.

2. Adjusting mechanism according to claim 1, wherein the first (52) and the second gearwheel-like latching means (54) are axially arranged on the driving shaft (50) one after the other.

3. Adjusting mechanism according to one of the claims 1 or 2, wherein the first (52) and the second gearwheel-like latching means (54) respectively comprise a cylindrical shape and teeth (53, 55), which are arranged onto the cylinder surface and which radially extend to the outside.

4. Adjusting mechanism according to one of the claims 1 to 3, wherein the first gearwheel-like latching means (52) and the second gearwheel-like latching means (54) comprise the same diameter.

5. Adjusting mechanism according to one of the claims 1 to 4, wherein the teeth (53) of the first gearwheel-like latching means (52) are sloped in a first tangential direction with respect to the rotational axis and the teeth (55) of the second gearwheel-like latching means (54) are sloped in a second tangential direction with respect to the rotational axis.

6. Adjusting mechanism according to one of the claims 1 to 5, wherein the driving body (10) comprises at least one first latch (30, 35), which is engageable with the first gearwheel-like latching means (52); and
wherein the driving body (10) comprises at least one second latch (40, 45) which is engageable with the second gearwheel-like latching means (54).

7. Adjusting mechanism according to claim 6, wherein the driving body (10) comprises two first latches (30, 35), which are arranged opposing each other and symmetrically to the rotational axis of the driving body (10) and wherein
the driving body (10) comprises two second latches (40, 45), which are arranged opposing each other and symmetrically to the rotational axis of the driving body (10).

8. Adjusting mechanism according to one of the claims 6 or 7, wherein one of the first latches (30, 35) and one of the second latches (40, 45) are biased in direction of the first and second gearwheel-like latching means (52, 54) by means of a single spring (60, 65), respectively.

9. Adjusting mechanism according to one of the claims 1 to 8, further comprising a housing (20) having at least one pin (22, 24) which projects in axial direction into the housing (20), wherein the pin (22, 24) disengages the at least one of the second latches (40, 45) from the second gearwheel-like latching means (54) during a rotation of the driving body (10) in the first rotational direction and
wherein the pin (22, 24) disengages the at least one of the first latches (30, 35) from the first gearwheel-like latching means (52) during a rotation of the driving body (10) in the second rotational direction.

10. Adjusting mechanism according to one of the claims 1 to 9, wherein the driving shaft (50) extends through the complete adjusting mechanism (1) to assemble the same together.

11. Adjusting mechanism according to claim 10, wherein the driving shaft (50) comprises at both ends recesses (58, 59), which are latchable with resilient holding elements (28) of the housing (20) and with resilient holding elements (18) of the driving body (10).

12. Adjusting mechanism according to one of the claims 1 to 11, wherein at least one extension spring (90, 95) is suspended between the driving body (10) and the housing (20) in radial direction, to automatically return the driving body (10) to its initial position after an actuation of the driving body (10) in the first or the second rotational direction.

## Patentansprüche

1. Verstellmechanismus (1) zum Verstellen von mindestens einem Bowdenzug, aufweisend:
a) einen drehbar gelagerten Antriebskörper (10);
b) eine drehbar gelagerte Antriebswelle (50), wobei der Antriebskörper (10) und die Antriebswelle (50) die gleiche Rotationsachse aufweisen;
c) ein erstes zahnradähnliches Verrastungsmittel (52) an der Antriebswelle (50), das in einer ersten Drehrichtung mit dem Antriebskörper (10) in Eingriff bringbar ist, um eine Drehbewegung des Antriebskörpers (10) in der ersten Drehrichtung auf die Antriebswelle (50) zu übertragen; und
d) ein zweites zahnradähnliches Verrastungsmittel (54) an der Antriebswelle (50), das in einer zweiten Drehrichtung mit dem Antriebskörper (10) in Eingriff bringbar ist, um eine Drehbewegung des Antriebskörpers (10) in der zweiten Drehrichtung auf die Antriebswelle (50) zu übertragen.

2. Verstellmechanismus gemäß Anspruch 1, wobei das erste (52) und das zweite zahnradähnliche Verrastungsmittel (54) axial hintereinander auf der Antriebswelle (50) angeordnet sind.

3. Verstellmechanismus gemäß einem der Ansprüche 1 oder 2, wobei das erste (52) und das zweite zahnradähnliche Verrastungsmittel (54) jeweils eine zylindrische Form und Zähne (53, 55) aufweisen, die auf der Zylinderoberfläche angeordnet sind und radial nach außen abstehen.

4. Verstellmechanismus gemäß einem der Ansprüche 1 bis 3, wobei das erste zahnradähnliche Verrastungsmittel (52) und das zweite zahnradähnliche Verrastungsmittel (54) den gleichen Durchmesser aufweisen.

5. Verstellmechanismus gemäß einem der Ansprüche 1 bis 4, wobei die Zähne (53) des ersten zahnradähnlichen Verrastungsmittels (52) in einer ersten in Bezug auf die Rotationsachse tangentialen Richtung geneigt sind und die Zähne (55) des zweiten zahnradähnlichen Verrastungsmittels (54) in einer zweiten in Bezug auf die Rotationsachse tangentialen Richtung geneigt sind.

6. Verstellmechanismus gemäß einem der Ansprüche 1 bis 5, wobei der Antriebskörper (10) mindestens eine erste Klinke (30, 35) aufweist, die mit dem ersten zahnradähnlichen Verrastungsmittel (52) in Eingriff bringbar ist; und
wobei der Antriebskörper (10) mindestens eine zweite Klinke (40, 45) aufweist, die mit dem zweiten zahnradähnlichen Verrastungsmittel (54) in Eingriff bringbar ist.

7. Verstellmechanismus gemäß Anspruch 6, wobei der Antriebskörper (10) zwei erste Klinken (30, 35) aufweist, welche einander gegenüberliegend symmetrisch zur Rotationsachse des Antriebskörpers (10) angeordnet sind und wobei
der Antriebskörper (10) zwei zweite Klinken (40, 45) aufweist, welche einander gegenüberliegend symmetrisch zur Rotationsachse des Antriebskörpers (10) angeordnet sind.

8. Verstellmechanismus gemäß einem der Ansprüche 6 oder 7, wobei jeweils eine der ersten Klinken (30, 35) und eine der zweiten Klinken (40, 45) mittels einer einzigen Feder (60, 65) in Richtung der ersten und zweiten Verrastungsmittel (52, 54) vorgespannt sind.

9. Verstellmechanismus gemäß einem der Ansprüche 1 bis 8, weiterhin aufweisend ein Gehäuse (20) mit mindestens einem in axialer Richtung in das Gehäuse (20) ragenden Stift (22, 24), wobei der Stift (22, 24) bei einer Drehung des Antriebskörpers (10) in die erste Drehrichtung die mindestens eine der zweiten Klinken (40, 45) außer Eingriff mit dem zweiten zahnradähnlichen Verrastungsmittel (54) bringt, und
wobei der Stift (22, 24) bei einer Drehung des Antriebskörpers (10) in die zweite Drehrichtung die mindestens eine der ersten Klinken (30, 35) außer Eingriff mit dem ersten zahnradähnlichen Verrastungsmittel (52) bringt.

10. Verstellmechanismus gemäß einem der Ansprüche 1 bis 9, wobei sich die Antriebswelle (50) durch den gesamten Verstellmechanismus (1) erstreckt, um diesen zusammenzumontieren.

11. Verstellmechanismus gemäß Anspruch 10, wobei die Antriebswelle (50) an beiden Enden Einschnitte (58, 59) aufweist, die mit federnden Halteelementen (28) des Gehäuses (20) und mit federnden Halteelementen (18) des Antriebskörpers (10) verrastbar sind.

12. Verstellmechanismus gemäß einem der Ansprüche 1 bis 11, wobei zwischen dem Antriebskörper (10) und dem Gehäuse (20) mindestens eine Zugfeder (90, 95) in radialer Richtung gespannt ist, um nach einer Betätigung des Antriebskörpers (10) in der ersten oder der zweiten Drehrichtung den Antriebskörper (10) automatisch in seine Ausgangsstellung zurückzustellen.

## Revendications

1. Mécanisme d'ajustement (1) destiné à ajuster au moins un câble Bowden, comprenant :
a. un corps d'entraînement (10) soutenu avec faculté de rotation ;
b. un arbre d'entraînement (50) soutenu avec faculté de rotation, dans lequel le corps d'entraînement (10) et l'arbre d'entraînement (50) ont le même axe de rotation ;
c. un premier moyen de verrouillage du type engrenage (52) au niveau de l'arbre d'entraînement (50), qui peut entrer en prise dans un premier sens de rotation avec le corps d'entraînement (10), afin de transmettre un mouvement de rotation du corps d'entraînement (10) à l'arbre d'entraînement (50) dans le premier sens de rotation ; et
d. un second moyen de verrouillage du type engrenage (54) au niveau de l'arbre d'entraînement (50), qui peut entrer en prise dans un second sens de rotation avec le corps d'entraînement (10), afin de transmettre un mouvement de rotation du corps d'entraînement (10) à l'arbre d'entraînement (50) dans le second sens de rotation.

2. Mécanisme d'ajustement selon la revendication 1, dans lequel le premier (52) et le second moyen de verrouillage du type engrenage (54) sont disposés de manière axiale sur l'arbre d'entraînement (50) l'un après l'autre.

3. Mécanisme d'ajustement selon l'une des revendications 1 ou 2, dans lequel le premier (52) et le second moyen de verrouillage du type engrenage (54) comprennent respectivement une forme cylindrique et des dents (53, 55), qui sont disposées sur la surface cylindrique et qui s'étendent de manière radiale vers l'extérieur.

4. Mécanisme d'ajustement selon l'une des revendications 1 à 3, dans lequel le premier mécanisme de verrouillage du type engrenage (52) et le second mécanisme de verrouillage du type engrenage (54) ont le même diamètre.

5. Mécanisme d'ajustement selon l'une des revendications 1 à 4, dans lequel les dents (53) du premier moyen de verrouillage du type engrenage (52) sont inclinées dans une première direction tangentielle par rapport à l'axe de rotation et les dents (55) du second moyen de verrouillage du type engrenage (54) sont inclinées dans une seconde direction tangentielle par rapport à l'axe de rotation.

6. Mécanisme d'ajustement selon l'une des revendications 1 à 5, dans lequel le corps d'entraînement (10) comprend au moins un premier cliquet (30, 35), qui peut entrer en prise avec le premier moyen de verrouillage du type engrenage (52) ; et dans lequel le corps d'entraînement (10) comprend au moins un second cliquet (40, 45) qui peut entrer en prise avec le second moyen de verrouillage du type engrenage (54).

7. Mécanisme d'ajustement selon la revendication 6, dans lequel le corps d'entraînement (10) comprend deux premiers cliquets (30, 35), qui sont disposés à l'opposé l'un de l'autre et symétriquement par rapport à l'axe de rotation du corps d'entraînement (10) et dans lequel
le corps d'entraînement (10) comprend deux seconds cliquets (40, 45), qui sont disposés à l'opposé l'un de l'autre et symétriquement par rapport à l'axe de rotation du corps d'entraînement (10).

8. Mécanisme d'ajustement selon l'une des revendications 6 ou 7, dans lequel l'un des premiers cliquets (30, 35) et l'un des seconds cliquets (40, 45) sont orientés dans le sens des premier et second moyens de verrouillage du type engrenage (52, 54) au moyen d'un ressort unique (60, 65), respectivement.

9. Mécanisme d'ajustement selon l'une des revendications 1 à 8, comprenant en outre un logement (20) comportant au moins une broche (22, 24) qui se projette dans le sens axial dans le logement (20), dans lequel la broche (22, 24) dégage le ou les seconds cliquets (40, 45) du second moyen de verrouillage du type engrenage (54) lors d'une rotation du corps d'entraînement (10) dans le premier sens de rotation et
dans lequel la broche (22, 24) dégage le ou les cliquets (30, 35) du premier moyen de verrouillage du type engrenage (52) lors d'une rotation du corps d'entraînement (10) dans le second sens de rotation.

10. Mécanisme d'ajustement selon l'une des revendications 1 à 9, dans lequel l'arbre d'entraînement (50) s'étend par la totalité du mécanisme d'ajustement (1) pour assembler celui-ci.

11. Mécanisme d'ajustement selon la revendication 10, dans lequel l'arbre d'entraînement (50) comprend au niveau des deux extrémités des renfoncements (58, 59), qui peuvent se verrouiller avec des éléments de support résilients (28) du logement (20) et avec des éléments de support résilients (18) du corps d'entraînement (10).

12. Mécanisme d'ajustement selon l'une des revendications 1 à 11, dans lequel au moins un ressort d'extension (90, 95) est suspendu entre le corps d'entraînement (10) et le logement (20) dans un sens radial, afin de ramener automatiquement le corps d'entraînement (10) vers sa position initiale après un actionnement du corps d'entraînement (10) dans la première ou la seconde direction de rotation.
